# EUROPÄISCHE PATENTSCHRIFT

(11) **EP 3 330 071 B1**
(45) Veröffentlichungstag und Bekanntmachung des Hinweises auf die Patenterteilung: **06.05.2020**
(21) Anmeldenummer: 17202743.5
(22) Anmeldetag: 21.11.2017
(51) Int. Cl.: B32B 5/02, B32B 7/04, B32B 11/04, B32B 11/08, B32B 11/10, B32B 15/02, B32B 15/20, B32B 3/04, E04D 5/10, E04D 5/12, E04D 5/14, E04D 13/00

(54) **BITUMEN-DICHTUNGSBAHN MIT ELEKTRISCH LEITFÄHIGER SCHICHT**
BITUMEN SEAL WEB WITH ELECTRICALLY CONDUCTIVE LAYER
BANDE D'ÉTANCHÉITÉ AU BITUME POURVUE DE COUCHE ÉLECTROCONDUCTRICE

(30) Priorität: 01.12.2016 AT 510902016
(43) Veröffentlichungstag der Anmeldung: 06.06.2018
(73) Patentinhaber: Büsscher & Hoffmann Gesellschaft m.b.H., 4470 Enns (AT)
(72) Erfinder: Landl, Karl, 4407 Steyr (AT)
(74) Vertreter: Müllner, Martin

(56) Entgegenhaltungen:
- EP-A1- 1 096 077
- DE-A1-102005 032 384

## Beschreibung

### Technisches Gebiet

Die vorliegende Erfindung betrifft eine Bitumen-Dichtungsbahn mit elektrisch leitfähiger Schicht.

### Stand der Technik

Aus EP 2488361 B ist bekannt, eine Dachabdichtung aus bituminösem Material mit innen liegender leitfähiger Schicht herzustellen. Es werden dazu Bahnen verlegt, die an der Oberseite bis auf die Bereiche entlang der Kanten die elektrisch leitfähige Schicht aufweisen. Die Bereiche entlang der Kanten müssen frei von der elektrisch leitfähigen Schicht bleiben, damit die einzelnen Bahnen miteinander in üblicher Weise verschweißt werden können.

Da nun aber die elektrisch leitenden Schichten nach dem Verlegen dieser ersten Lage nicht elektrisch miteinander verbunden sind, muss eine zweite Lage verlegt werden. Bei dieser zweiten Lage weist die elektrisch leitfähige Schicht nach unten. Wenn man die Bahnen der zweiten Lage gegenüber den Lagen der ersten Lage entsprechend versetzt, sind die leitfähigen Schichten aller Bahnen miteinander elektrisch verbunden.

Ein Wassereinbruch kann nun z.B. so detektiert werden, dass man den Widerstand zwischen der elektrisch leitfähigen Schicht und dem Mauerwerk des Gebäudes (das üblicher Weise eine gewisse Leitfähigkeit aufweist) misst; wenn dieser nicht extrem hoch ist, so gibt es einen Wassereinbruch. Bei einem begrünten Dach kann man auch den Widerstand zwischen der Erde im begrünten Bereich (die jedenfalls in feuchtem Zustand gut leitet) und der elektrisch leitfähigen Schicht messen.

Der offensichtliche Nachteil der bekannten Lösung besteht darin, dass zwei Lagen verlegt werden müssen, d.h. der Materialaufwand und der Arbeitsaufwand sind doppelt so hoch wie beim Verlegen normaler Dichtungsbahnen. Zum allgemeinen technischen Hintergrund der Erfindung gehört auch EP 1 096 077 A1.

### Kurzbeschreibung der Erfindung

Es ist Aufgabe der vorliegenden Erfindung, diesen Nachteil zu beseitigen und eine Bitumen-Dichtungsbahn mit elektrisch leitfähiger Schicht zu schaffen, sodass nach dem Verlegen von nur einer Lage automatisch die elektrisch leitfähige Schicht aller Bahnen miteinander elektrischen Kontakt haben.

Diese Aufgabe wird durch eine Bitumen-Dichtungsbahn des Anspruchs 1 gelöst.

Wenn man solche Bahnen nebeneinander verlegt, liegt - je nach Ausführungsform - entweder der an der Unterseite einer Bahn frei liegende Bereich der elektrisch leitenden Schicht auf dem oben zumindest teilweise freiliegenden Bereich der benachbarten Bahn auf, oder es liegt die elektrisch leitfähige Schicht mit dem unten zumindest teilweise freiliegenden Bereich einer Bahn auf dem an der Oberseite der benachbarten Bahn frei liegenden Bereich von deren elektrisch leitenden Schicht auf, sodass diese beiden elektrisch leitenden Schichten einander berühren und elektrisch miteinander verbunden sind. Es ist dabei nicht notwendig, dass diese Berührung über die gesamte Längskante der Bahn erfolgt, es genügt, wenn dies an einigen Stellen, ja sogar, wenn dies nur an einer einzigen Stelle der Fall ist. Da die Bahnen mehrere Meter lang sind, ist dies in der Praxis nicht zu verhindern. Der elektrische Kontakt muss auch nicht extrem niederohmig sein, denn die Leitfähigkeit bei einem Wasserschaden ist ohnehin gering, kann also auch bei größerem Übergangswiderstand zwischen den Bahnen sicher detektiert werden. Es muss nicht die elektrisch leitende Schicht selbst an der anderen Längskante oben bzw. unten frei liegen, es können auch ein oder mehrere zusätzliche Elemente sein, die mit der elektrisch leitfähigen Schicht verbunden sind.

Wenn die Bitumen-Dichtungsbahn mit einer nicht-leitenden Verstärkungseinlage versehen ist, liegt die elektrisch leitfähige Schicht unterhalb bzw. oberhalb der Verstärkungseinlage. In diesem Fall kann die elektrisch leitfähige Schicht an der anderen Längskante der Dichtungsbahn um die Verstärkungseinlage nach oben bzw. unten umgebogen sein und dort zumindest teilweise freiliegen. Auf diese Weise lässt sich die vorliegende Erfindung fast ohne Zusatzaufwand bei der Herstellung verwirklichen.

Alternativ dazu ist es möglich, die Verstärkungseinlage selbst elektrisch leitfähig auszuführen; wenn es sich bei der Verstärkungseinlage um ein Flies handelt, können z.B. metallische Fasern oder Karbonfasern eingearbeitet sein.

Vorzugsweise liegt der umgebogene Bereich der elektrisch leitfähigen Schicht nur in einem Streifen mit Abstand zur anderen Längskante frei. Dadurch bleibt direkt am Rand ein Streifen von bituminösem Material, der zum Verschweißen der benachbarten Bahn verwendet werden kann. Bei dieser Ausführung können die Bahnen also bis zum Rand miteinander verschweißt werden. Bei selbstklebenden Bahnen wird nicht verschweißt, sondern an den entsprechenden Stellen verkleben die Bahnen selbständig.

Weiters ist es zweckmäßig, wenn die elektrisch leitfähige Schicht an der Unterseite bzw. an der Oberseite bis auf den Bereich an der einen Längskante mit einer Bitumenschicht abgedeckt ist. Einerseits wird dadurch die elektrisch leitfähige Schicht vor Beschädigungen geschützt und andererseits erleichtert dies das Verschweißen benachbarter Bahnen.

Wenn zusätzlich die elektrisch leitfähige Schicht an der anderen Längskante durch Bitumen in einem seitlichen Bereich abgedeckt ist, wird außerdem die elektrisch leitfähige Schicht sowohl gegenüber der Oberseite als auch gegenüber der Unterseite der Dachabdichtung elektrisch isoliert.

### Kurze Beschreibung der Zeichnungsfiguren

An Hand der beiliegenden Zeichnungen wird die vorliegende Erfindung näher erläutert. Es zeigt: Fig. 1 einen Querschnitt einer ersten Ausführungsform einer erfindungsgemäßen Dichtungsbahn; Fig. 2 den Bereich zweier überlappender Bahnen dieser ersten Ausführungsform; Fig. 3 einen Querschnitt einer zweiten Ausführungsform einer erfindungsgemäßen Dichtungsbahn; und Fig. 4 den Bereich zweier überlappender Bahnen dieser zweiten Ausführungsform.

### Beschreibung der Ausführungsarten

Zu beachten ist, dass die Dichtungsbahnen in den Zeichnungen extrem überhöht dargestellt sind; tatsächlich ist eine Dichtungsbahn typisch einen Meter breit und nur wenige Millimeter dick. Die Zeichnungen sind daher mehr als 10fach überhöht. Außerdem sind zur Verbesserung der Übersichtlichkeit die einzelnen Lagen jeder Dichtungsbahn mit geringem Abstand zueinander dargestellt; dieser Abstand ist in der Realität natürlich nicht vorhanden.

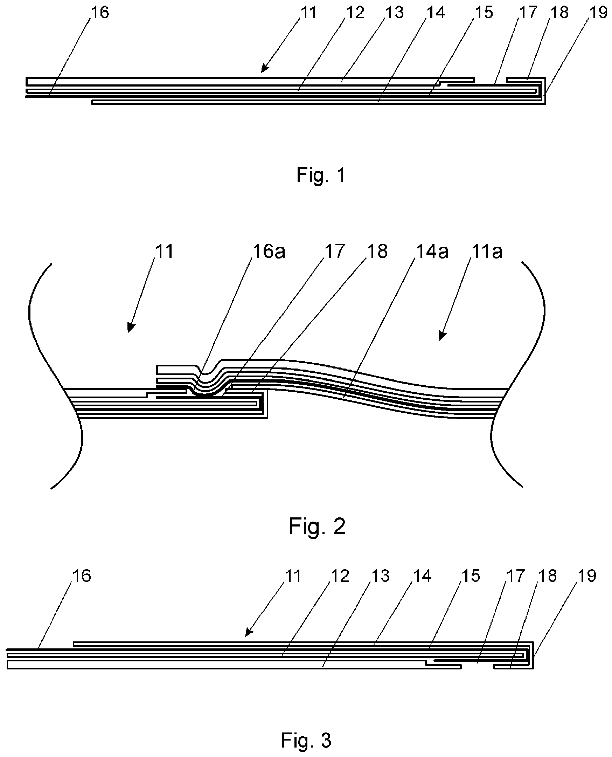

Die insgesamt mit 11 bezeichnete Bitumen-Dichtungsbahn (siehe Fig. 1) weist in üblicher Weise eine Verstärkungseinlage 12 auf, die unten mit einer Bitumenschicht 14 und oben mit einer Bitumenschicht 13 versehen ist. In der unteren Bitumenschicht 14 liegt eine elektrisch leitende Schicht 15. Diese kann aus einer Aluminiumfolie bestehen, die - wenn es sich um keine Dampfsperrbahn handeln soll - gelocht sein kann. Es kann sich aber auch um ein Drahtgitter handeln oder überhaupt um jedes Material, das flächig leitet, beispielsweise um ein metallisiertes Flies, ein karbonisiertes Flies oder einen leitfähigen Kunststoff.

Die elektrisch leitende Schicht 15 liegt an der in den Zeichnungen linken Längskante der Bitumen-Dichtungsbahn 11 frei, weil die Bitumenschicht 14 mit Abstand vor der linken Längskante endet. Es bildet sich somit ein unterer Kontaktbereich 16 aus. An der gegenüberliegenden Längskante, also an der in den Zeichnungen rechten Längskante, ist die elektrisch leitende Schicht 15 um die Verstärkungseinlage 12 nach oben umgebogen. In diesem Bereich weist die obere Bitumenschicht 13 einen ausgesparten Streifen auf, sodass sich ein oberer Kontaktbereich 17 ergibt. Der ausgesparte Streifen und somit der Kontaktbereich 17 haben einen Abstand zur rechten Längskante, sodass ein Streifen 18 zum Verschweißen mit einer benachbarten Bahn zur Verfügung steht. Im Bereich der rechten Kante können die beiden Bitumenschichten 13 und 14 durch einen seitlichen Bereich 19 miteinander verbunden sein. Dieser seitliche Bereich 19 kann sich aber auch erst beim Verschweißen benachbarter Bahnen ergeben.

Aus Fig. 2 ist die Verbindung zweier benachbarter Bitumen-Dichtungsbahnen 11, 11a ersichtlich. Bei der zweiten Bitumen-Dichtungsbahn 11a werden dieselben Bezugszeichen, jedoch mit dem Zusatz "a" verwendet.

Nachdem die erste Bitumen-Dichtungsbahn 11 verlegt und mit dem Untergrund verschweißt wurde, wird die nächste Bitumen-Dichtungsbahn 11a überlappend aufgelegt, und zwar so, dass der untere Kontaktbereich 16a der Bitumen-Dichtungsbahn 11a auf dem oberen Kontaktbereich 17 der Bitumen-Dichtungsbahn 11 aufliegt. Wie man sieht, biegt sich die obere Bitumen-Dichtungsbahn 11a in diesem Bereich durch ihr Eigengewicht durch, wobei diese Durchbiegung tatsächlich mit nur sehr geringen Krümmungen erfolgt (die Durchbiegung beträgt etwa 1 mm in einem mehrere Zentimeter breiten Streifen); lediglich in der Zeichnung sehen die Krümmungen infolge der Überhöhung sehr scharf aus. In dieser Position kann nun der Streifen 18 mit der Bitumenschicht 14a verschweißt werden, und die Dichtungsbahn 11a insgesamt mit dem Untergrund.

Auf analoge Weise werden alle weiteren Bahnen verlegt, sodass sich insgesamt eine leitende Schicht im Inneren der Abdichtung ergibt.

Die Bahnen müssen nicht unbedingt verschweißt werden, sie können auch selbstklebend sein oder auf sonstige Weise gefügt werden.

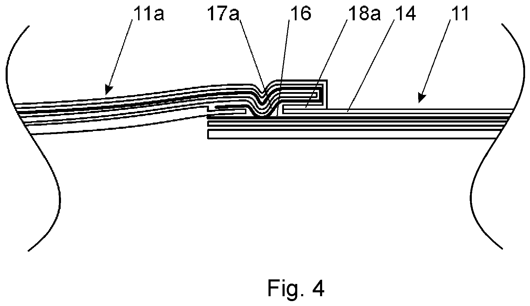

Das Ausführungsbeispiel von Fig. 3 und 4 unterscheidet sich von dem eben beschriebenen Ausführungsbeispiel nur dadurch, dass es vertikal spiegelsymmetrisch ausgebildet ist.

Demgemäß ist die elektrisch leitende Schicht 15 in der oberen Bitumenschicht 14 vorgesehen. Die elektrisch leitende Schicht 15 liegt wiederum an der in den Zeichnungen linken Längskante der Bitumen-Dichtungsbahn 11 frei, weil die Bitumenschicht 14 mit Abstand vor der linken Längskante endet. Es bildet sich somit ein oberer Kontaktbereich 16 aus. An der gegenüberliegenden Längskante, also an der in den Zeichnungen rechten Längskante, ist die elektrisch leitende Schicht 15 um die Verstärkungseinlage 12 nach unten umgebogen. In diesem Bereich weist die untere Bitumenschicht 13 einen ausgesparten Streifen auf, sodass sich ein unterer Kontaktbereich 17 ergibt.

Aus Fig. 4 ist die Verbindung zweier benachbarter Bitumen-Dichtungsbahnen 11, 11a gemäß Fig. 3 ersichtlich. Bei der zweiten Bitumen-Dichtungsbahn 11a werden wiederum dieselben Bezugszeichen, jedoch mit dem Zusatz "a" verwendet.

Nachdem die erste Bitumen-Dichtungsbahn 11 verlegt und mit dem Untergrund verschweißt wurde, wird die nächste Bitumen-Dichtungsbahn 11a überlappend aufgelegt, und zwar so, dass der untere Kontaktbereich 17a der Bitumen-Dichtungsbahn 11a auf dem oberen Kontaktbereich 16 der Bitumen-Dichtungsbahn 11 aufliegt. Wie man sieht, biegt sich die obere Bitumen-Dichtungsbahn 11a in diesem Bereich wiederum durch ihr Eigengewicht durch, sodass sich die beiden Kontaktbereiche 16, 17a zumindest stellenweise berühren. In dieser Position kann nun der Streifen 18a mit der Bitumenschicht 14 verschweißt werden, und die Dichtungsbahn 11a insgesamt mit dem Untergrund.

Wenn die elektrisch leitfähige Schicht nicht im Inneren liegen muss, kann die Bitumenschicht 14 auch fehlen, sodass sich der Kontaktbereich 16 über die gesamte Breite der Bahn erstreckt.

Nicht dargestellt sind die üblichen Oberflächenbeschichtungen. Die Oberseite der Bahn kann z.B. mit Sand bestreut sein, um ein Verkleben der Bahn im aufgerollten Zustand zu verhindern. Insofern ist die vertikale Symmetrie der beiden Ausführungsformen nicht vollkommen.

## Patentansprüche

1. Bitumen-Dichtungsbahn (11) mit zumindest einer Bitumenschicht (13) und mit einer elektrisch leitfähigen Schicht (15), wobei die elektrisch leitfähige Schicht (15) zumindest an einer Längskante an der Unterseite oder an der Oberseite der Dichtungsbahn frei liegt und dass sie oder zumindest ein mit ihr elektrisch leitend verbundenes Element im Bereich der anderen Längskante der Dichtungsbahn oben bzw. unten zumindest teilweise freiliegt, **dadurch gekennzeichnet, dass** die Bitumen-Dichtungsbahn (11) eine Verstärkungseinlage (12) aufweist, **dass** die elektrisch leitfähige Schicht (15) unterhalb bzw. oberhalb der Verstärkungseinlage (12) vorgesehen ist, dass die Bitumenschicht (13) an der anderen Seite der Verstärkungseinlage (12) vorgesehen ist **und dass** die elektrisch leitfähige Schicht (15) an der anderen Längskante der Dichtungsbahn (11) um die Verstärkungseinlage (12) nach oben bzw. unten umgebogen ist und dort zumindest teilweise freiliegt.

2. Bitumen-Dichtungsbahn nach Anspruch 1, **dadurch gekennzeichnet, dass** der umgebogene Bereich der elektrisch leitfähigen Schicht (15) nur in einem Streifen mit Abstand zur anderen Längskante freiliegt.

3. Bitumen-Dichtungsbahn nach Anspruch 1 oder 2, **dadurch gekennzeichnet, dass** die elektrisch leitfähige Schicht (15) an der Unterseite bzw. an der Oberseite bis auf den Bereich an der einen Längskante mit einer weiteren Bitumenschicht (14) abgedeckt ist.

4. Bitumen-Dichtungsbahn nach Anspruch 2 und 3, **dadurch gekennzeichnet, dass** die elektrisch leitfähige Schicht (15) an der anderen Längskante durch Bitumen in einem seitlichen Bereich (19) abgedeckt ist.

## Claims

1. A bituminous sealing web (11) with at least one bitumen layer (13) and having an electrically conductive layer (15), wherein the electrically conductive layer (15) is exposed at least on one longitudinal edge at the underside or at the upper side of the sealing web, and that it or at least an element conductively connected thereto is at least partially exposed in the region of the other longitudinal edge of the sealing web at the top or the bottom, respectively, **characterised in that** the bituminous sealing web (11) includes a reinforcing insert (12), **that** the electrically conductive layer (15) is provided below or above the reinforcing insert (12), respectively, that the bitumen layer (13) is provided at the other side of the reinforcing insert (12), **and that** the electrically conductive layer (15) on the other longitudinal edge of the sealing web (11) is bent around the reinforcing insert (12) upwardly or downwardly, respectively, and is exposed there at least partially.

2. Bituminous sealing web according to claim 1, **characterised in that** the bent region of the electrically conductive layer (15) is exposed only in a strip at a distance to the other longitudinal edge.

3. Bituminous sealing web according to claim 1 or 2, **characterized in that** the electrically conductive layer (15) is covered with a further bitumen layer (14) at the underside or at the upper side, respectively, except for the region on the one longitudinal edge.

4. Bituminous sealing web according to claim 2 and 3, **characterized in that** the electrically conductive layer (15) on the other longitudinal edge is covered by bitumen in a lateral region (19).

## Revendications

1. Bande d'étanchéité à base de bitume (11) pourvue d'au moins une couche de bitume (13) et d'une couche électriquement conductrice (15), la couche électriquement conductrice (15) étant exposée au moins sur un bord longitudinal de la face inférieure ou de la face supérieure de ladite bande d'étanchéité, et elle-même, sinon au moins un élément avec lequel elle est en connexion électriquement conductrice, étant exposée au moins sur certaines parties en bas respectivement en haut se trouvant au niveau de l'autre bord longitudinal de ladite bande d'étanchéité, **caractérisée en ce que** la bande d'étanchéité à base de bitume (11) comporte un insert de renforcement (12), **que** la couche électriquement conductrice (15) est disposée au-dessous respectivement au-dessus de l'insert de renforcement (12), que la couche de bitume (13) est disposée sur l'autre côté de l'insert de renforcement (12) **et que** la couche électriquement conductrice (15) est repliée, sur l'autre bord longitudinal de la bande d'étanchéité (11), vers le haut respectivement vers le bas autour de l'insert de renforcement (12), de manière à y être exposée au moins sur certaines parties.

2. Bande d'étanchéité à base de bitume selon la revendication 1, **caractérisée en ce que** la zone repliée de la couche électriquement conductrice (15) n'est exposée que dans une partie en forme de bande située à distance de dudit autre bord longitudinal.

3. Bande d'étanchéité à base de bitume selon les revendications 1 ou 2, **caractérisée en ce que** la couche électriquement conductrice (15) est recouverte d'une autre couche de bitume (14) sur la face inférieure respectivement la face supérieure, à l'exception de la zone située sur ledit bord longitudinal.

4. Bande d'étanchéité à base de bitume selon les revendications 2 et 3, **caractérisée en ce que,** sur ledit autre bord longitudinal, la couche électriquement conductrice (15) est recouverte par du bitume dans une zone latérale (19).
